# EUROPEAN PATENT APPLICATION

(11) **EP 4 375 888 A1**
(43) Date of publication of application: **29.05.2024**
(21) Application number: 22315300.8
(22) Date of filing: 28.11.2022
(51) Int. Cl.: G06N 10/60, G06E 3/00

(54) **METHOD FOR SOLVING MATRIX PROBLEMS, AND SYSTEM FOR IMPLEMENTING THIS METHOD**

(71) Applicant: Quandela, 91300 Massy (FR)
(72) Inventor: Mezher, Rawad, 91120 Palaiseau (FR); Goncalves De Carvalho, Filipa, 92340 Bourg-la-Reine (FR); Mansfield, Shane, 75011 Paris (FR)
(74) Representative: Yes My Patent

(57) **Abstract**

The invention relates to a method for solving matric problems, comprising:
- an encoding step (S1), wherein a matrix (M) is transformed into a unitary matrix (U), by encoding the matrix (M) with a unitary dilation theorem used as an encoding function; then
- an optical design step (S2), wherein the unitary matrix (U) is transformed into a linear optical circuit (14), then an optical device (10) is formed by the linear optical circuit (14), single-photon sources (12) at input and single-photon detectors (16) at output; then
- an analysis step (S3), wherein the optical device (10) is used for solving a problem related to the matrix (M), by analysing the output state of the single-photon detectors (16). The invention also relatives to a system for implementing this method.

## Description

### TECHNICAL FIELD OF THE INVENTION

The invention concerns a method for solving matrix problems, particularly graph problems, in fields including chemistry, biochemistry, engineering, finance and computer science, among many others. The invention also concerns a system for implementing such a method.

### BACKGROUND OF THE INVENTION

Matrices and graphs are mathematical objects that are ubiquitous in applied sciences. They allow convenient representations structures.

By calculating characteristics of matrices and graphs, one can provide solutions to a huge variety of problems arising in many fields, wherever these problems can be expressed in terms of mathematical structures.

The idea of using quantum hardware to solve graph problems has previously been explored in works such as: *"*Kamil Bradler et al. Physical Review A 98.3 (2018*)"* ; *"*Juan Miguel Arrazola and Thomas R Bromley. Physical review letters 121.3 (2018*)"* ; *"*Kamil Bradler et al. Special Matrices 9.1 (2021*)".*

However, these works cover only the encoding of graphs, and not the more general case of matrices. Furthermore, these methods use squeezed states of coherent laser light rather than single-photons in the invention.

Compared to the aforementioned works, the method according to the invention has the advantage to allow for encoding any matrix onto a linear optical circuit, whereas using squeezed state (because of certain physical constraints) can only be used to encode a special class of matrices, symmetric matrices, onto linear optical circuits. This allows in principle to go beyond graph problems onto general matrix problems.

The mathematical idea of unitary dilations was used in *"*Shantanav Chakraborty et al. ArXiv:1804.01973 (2018*)".* The applications mentioned in this work are different to the applications solved by the invention, and are therefore incomparable.

Moreover, the model of computing and the encoding of this work are based on qubits, rather than single-photons and linear optics in the invention.

The qubit model of computation presented in *"*Nielsen, Michael A., and Isaac Chuang. Quantum computation and quantum information. (2002): 558-559" is different from the model of computation used by the invention to solve matrix problems, rather based on *"*Scott Aaronson, Alex Arkhipov, The Computational Complexity of Linear Optics, https://arxiv.org/abs/1011.3245*".*

The idea of solving graph, problems with linear optics was developed in: *"*Dorit. Aharonov et al. Proceedings of the thirty-third annual ACM symposium on Theory of computing, 2001*"* ; *"*Wang et al. ArXiv: 2208.13186*".*

However, the method for solving the problems and the encoding are different from the invention. Indeed, these works embed adjacency matrices into Hamiltonian operators, which indirectly govern the (unitary) dynamics of a quantum system according to the Schrodinger equation, whereas our method encodes general matrices, including adjacency matrices, directly into a unitary which can be implemented in linear optics.

### SUMMARY OF THE INVENTION

The aim of the invention is to provide an improved method for solving matrix problems, particularly graph problems.

To this end, the invention concerns a method for solving matrix problems, comprising:
- an encoding step, wherein a matrix is transformed into a unitary matrix, by encoding the matrix with a unitary dilation theorem used as an encoding function; then
- an optical design step, wherein the unitary matrix is transformed into a linear optical circuit, then an optical device is formed by the linear optical circuit, single-photon sources at input and single-photon detectors at output; then
- an analysis step, wherein the optical device is used for solving a problem related to the matrix, by analysing the output state of the single-photon detectors.

The invention achieves an efficient and fast resolution of matrix and graph problems, with a single-photons and linear optical device. Firstly, the unitary dilation theorem is used as an efficient solution for encoding a matrix into a linear optical circuit. The unitary dilation theorem allows efficiently embedding any bounded matrix of size n onto a generic linear optical circuit over 2*n spatial modes. Secondly, the linear optical circuit is coupled to single-photon sources and single-photon generators to form the optical device. Thirdly, the optical device is used for observing the detection statistics of the photons and the circuit outputs, then computing the characteristics of the matrix and solve the problem.

According to further aspects of the invention which are advantageous but not compulsory, such a method may incorporate one or several of the following features:
- In linear optical quantum computing, the probability of observing a specific output state, given a specific input, is proportional to the permanent of the matrix. In the analysis step, the permanent corresponding to observing the same output state as the input is used for solving a problem related to the matrix.
- The method is implemented for solving a problem related to at least one graph, which is associated with a matrix.
- The graph has an adjacency matrix, which is transformed into a unitary matrix in the encoding step.
- In the encoding step, the matrix of dimension n X n is scaled down by a factor S into a scaled matrix, which is embedded onto a larger unitary matrix of dimension 2n X 2n. In the optical design step, the unitary matrix is transformed into a linear optical circuit of 2n modes.
- The method is implemented for solving problems related to two graphs. Each graph has a Laplacian matrix. The probability of observing a specific output state, given a specific input, is proportional to the permanent of each Laplacian matrix. The permanents of the Laplacian matrices are used for determining if two graphs are isomorphic or not.
- The method is implemented for solving problems related to densest subgraph identification. In the encoding step, a block matrix is constructed with the adjacency matrices of all subgraphs to be tested. In the optical design step, the block matrix is embedded into a linear optical circuit. In the analysis step, the probability of observing a specific output state, given a specific input, is proportional to the permanent of each adjacency matrix. The densest subgraph has the highest permanent, and therefore appears most in the output statistics.
- A boosting is performed for accelerating the problem solving. In the encoding step, the unitary matrix is modified to boost the probabilities of detection events required for solving the matrix problem in the analysis step.
- The boosting is performed when the method is implemented for solving a problem related to a graph, which is associated with an adjacency matrix. In the encoding step, the adjacency matrix is modified by multiplying the row with the least non-zero elements by a number w, preferably comprised between 1 and 5.

The invention also concerns a system for implementing a method as defined above. The systems comprises an encoding device for implementing the encoding step; an optical device constructed in the optical design step; and an analysis device for implementing the analysis step.

The system is a noisy near-term quantum system.

The system may be integrated to a quantum computer.

### BRIEF DESCRIPTION OF THE DRAWINGS

The invention will now be explained in correspondence with the annexed figures, and as an illustrative example, without restricting the object of the invention. In the annexed figures:
- Figure 1 is a schematic representation of the method, according to a first embodiment of the invention.
- Figure 2 is a more detailed representation of the optical device, from the first embodiment of figure 1, comprising single-photon sources at input, the linear optical circuit in the midst, and single-photon detectors at output.
- Figure 3 partly shows the encoding step and the optical design step, using a scaled down matrix, in a second embodiment of the invention.
- Figure 4 is a schematic representation of the optical device, for the second embodiment of figure 3.
- Figure 5 shows different graphs.
- Figure 6 shows a graph and its adjacency matrix, used in a third embodiment of the invention.
- Figure 7 partly shows the encoding step and the optical design step, using a scaled down matrix, in a fourth embodiment of the invention.
- Figure 8 is a schematic representation of the optical device, for the fourth embodiment of figure 5.
- Figure 9 is a schematic representation of two graphs, according to a fifth embodiment of the invention, implemented for solving isomorphism problems.
- Figure 10 shows a graph, its adjacency matrix, and its Laplacian matrix.
- Figure 11 is a schematic representation of the optical device, for a sixth embodiment of the invention, implemented for solving problems related to the densest subgraph.
- Figure 12 is a schematic representation of a seventh embodiment of the invention, showing the encoding step and a table, implemented for boosting the probabilities of observing relevant detection events and therefore speed up the algorithms.
- Figure 13 is a schematic representation of an eight embodiment of the invention, which depicts six representative examples of graphs.
- Figure 14 is a table showing the permanent estimation of the graphs of figure 13.

### DETAILED DESCRIPTION OF SOME EMBODIMENTS

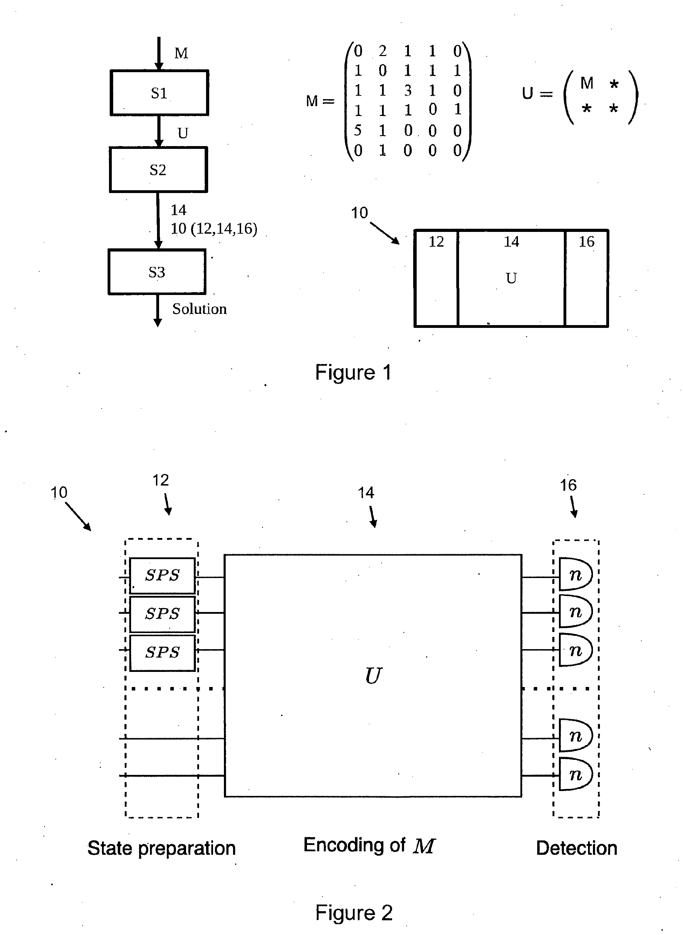

Figures 1 and 2 show a first embodiment of the method according to the invention, implemented for solving a problem related to a matrix (M). The method comprises an encoding step (S1), an optical design step (S2) and an analysis step (S3).

In the encoding step (S1), the matrix (M) is transformed into a unitary matrix (U), by encoding the matrix (M) with a unitary dilation theorem used as an encoding function.

In the optical design step (S2), the unitary matrix (U) is transformed into a linear optical circuit (14). In this regard, we can use any of the known universal linear optical circuit, for example *"*Reck M, Zeilinger A, Bernstein HJ, Bertani P. Experimental realization of any discrete unitary operator. Physical review letters. 1994 Jul 4;73(1):58." ; *"*Clements WR, Humphreys PC, Metcalf BJ, Kolthammer WS, Walmsley IA. Optimal design for universal multiport interferometers. Optica. 2016 Dec 20;3(12):1460-5*." ; "*Tsakyridis A, Giamougiannis G, Totovic A, Pleros N. Fidelity Restorable Universal Linear Optics. Advanced Photonics Research. 2021:2200001*."*

After creating the circuit (14), an optical device (10) is formed by single-photon sources (12) at input, the linear optical circuit (14) in the midst, and single-photon detectors (16) at output.

In the analysis step (S3), the optical device (10) is used for solving a problem related to the matrix (M), by analysing the.output state of the single-photon detectors (16). Upon inserting single-photons into the circuit (14) encoding the matrix (M), then observing the detection statistics of the photons and the circuit (14) outputs, the characteristics of the matrix (M) can be computed for problem solving.

The linear optical circuit (14) is an interferometer formed by two-mode linear optical components (phase shifters, beam splitters, for example) arranged in a specific geometry. 'Universal' interferometers are known, for implementing any unitary transformation on a given number of modes. A merit of the invention is to consider using these universal interferometers for the setup.

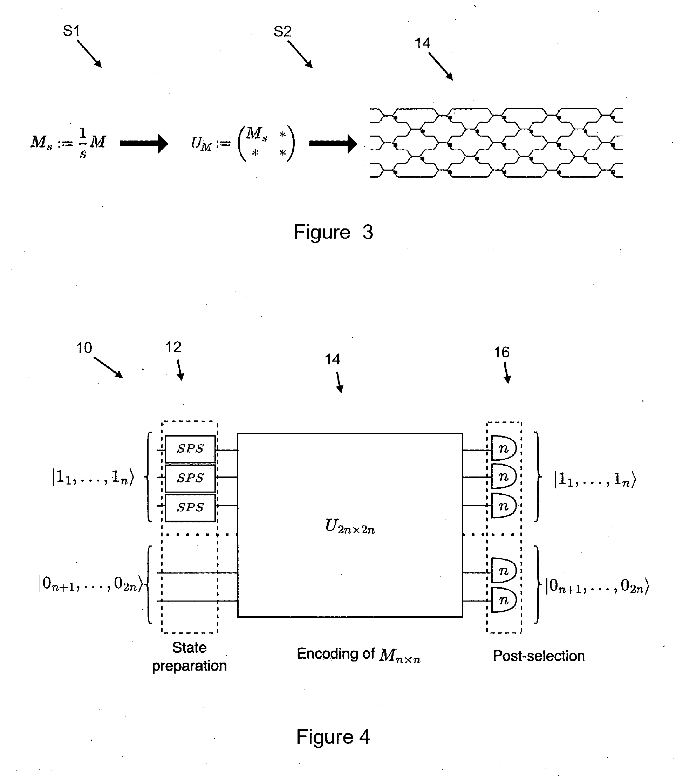

Several embodiments of the invention are represented on figures 3 to 14. In these embodiments, elements similar to the first embodiment have the same references and work in the same way. Only the differences with respect to the first embodiment are described hereafter.

Figures 3 and 4 shows a second embodiment of the method according to the invention, implemented for solving a problem related to a matrix (M), using a scaled down matrix (Ms). In the encoding step (S1), the matrix (M) of dimension n X n is scaled down by a factor S into a scaled matrix (Ms). Then the scaled matrix (Ms) is embedded onto a larger unitary matrix (U_{M}) of dimension 2n X 2n by using the unitary dilation theorem. In the optical design step (S2), the unitary matrix (U_{M}) is transformed into a linear optical circuit (14) of 2n modes.

In linear optical quantum computing, the probability of observing a specific output state, given a specific input, is proportional to the permanent (Per) of the matrix (M). In the analysis step (S3), the permanent (Per) corresponding to observing the same output state as the input can be used for solving a problem related to the matrix (M).

The method according to the invention allows a rephrasing of the matrix or graph problem of interest (e.g., dense subgraph identification, computing number of perfect matchings, graph isomorphism), as a problem of computing matrix permanents (Per).

We demonstrate that the probabilities of certain detection events reveal the matrix permanent (Per). More precisely, an estimate of certain detection events of our setup (obtained by repeating the experiment many times and collecting the detection statistics) is the solution to the matrix problem of interest.

Figure 4 show the device (10) configured for computing Per(M). First, an input state composed of n single photons emitted by n single photons sources (12) is passed through the linear optical circuit (14) of size 2n encoding the unitary matrix (U_{M}) = (U₂ₙₓ₂ₙ). We detected the output state by means of placing 2n single photon detectors (16) at the output modes. Then we post-select on observing n photons in the first n output modes.

When post-selecting, we only look at statistics which are relevant to the solution of our problem, out of the total statistics given by the device (10) and method. For example, when we pass single photons through linear optical circuits (14), and measure these with single-photon detectors (16), we get different output arrangements of single photons, and we only look at the output arrangement which is exactly like the input arrangement.

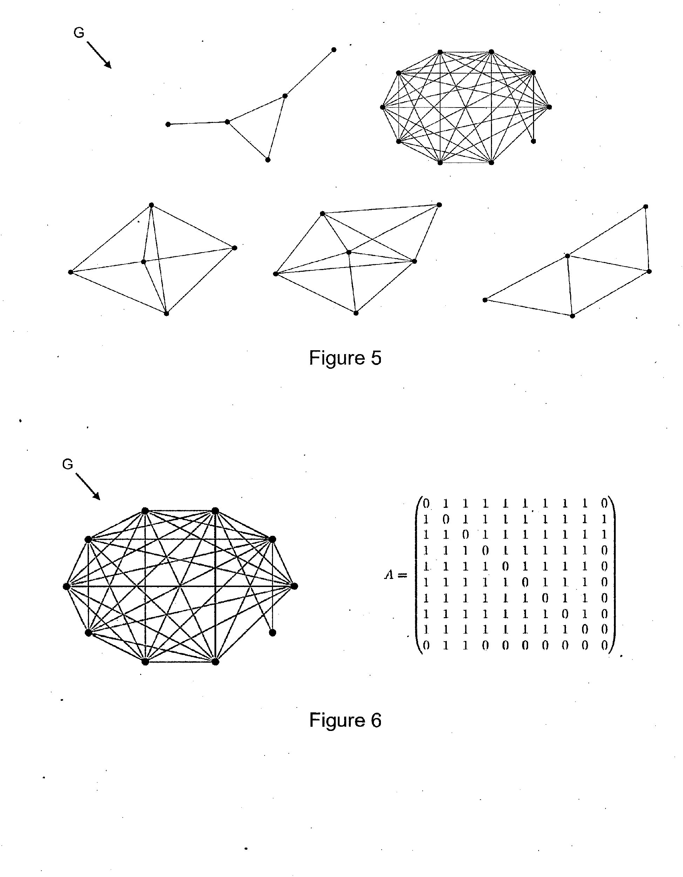

Figure 5 shows different graphs, that can be considered for the resolutions of graphs problems with the method according to the invention.

For example, the method allows determining the number of perfect matchings of a bipartite graph, determining whether two graphs are isomorphic, finding the densest subgraph in a given graph, etc.

More examples of concrete problems and use-cases that can be represented in terms of matrices are a broad range of graph problems. These problems appear in many important areas such as finding optimal routes, determining structural properties of molecules, finance applications, and many others.

Figure 6 show a third embodiment of the method according to the invention, implemented for solving a problem related to a graph (G). The graph (G) has an adjacency matrix (A), that is transformed into a unitary matrix (U) in the encoding step.

The adjacency matrix (A) is a symmetric binary matrix containing all information about the edges and vertices present in a graph. The adjacency matrix (A) contains zeros (no edge) and ones (edge) describing how vertices of the graph are connected. Linear optics can only perform unitary transformations. Yet the adjacency matrix (A) is not a unitary matrix (U) in general. Our solution is transform the adjacency matrix (A) into a unitary matrix (U) encoded in the linear optical circuit (14). In other words, the method allows encoding a graph (G) into a linear optical circuit (14).

As explained regarding the embodiments here-below, we can use different matrices than the adjacency matrix (A).

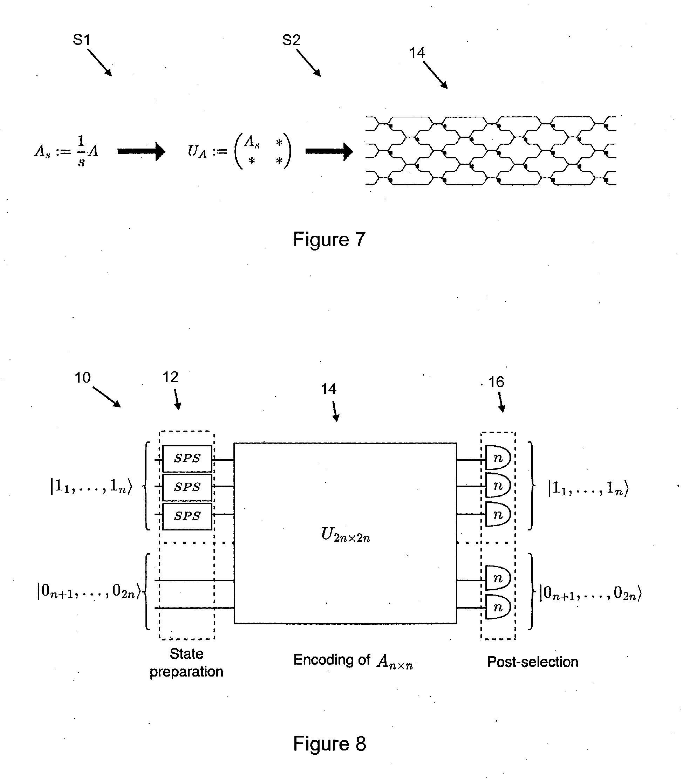

Figures 7 and 8 shows a fourth embodiment of the method according to the invention, implemented for solving a problem related to a graph (G), using a scaled down adjacency matrix (As). In the encoding step (S1), the adjacency matrix (A) of dimension n X n is scaled down by a factor S into a scaled matrix (As). Then the scaled matrix (As) is embedded onto a larger unitary matrix (U_{A}) of dimension 2n X 2n. In the optical design step (S2), the unitary matrix (U_{A}) is transformed into a linear optical circuit (14) of 2n modes.

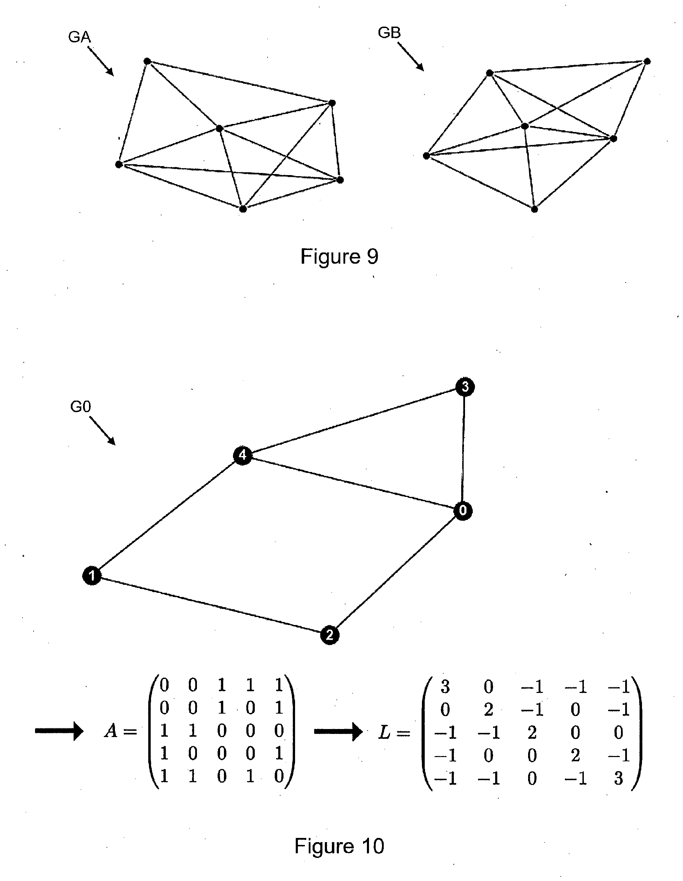

Figure 9 shows a fifth embodiment of the method according to the invention, implemented for solving problems related to isomorphism analysis of a pair of graphs (GA, GB).

Graph isomorphism has applications in chemistry (*"*John W Raymond and Peter Willett. Journal of computer-aided molecular design 16.7 (2002*)"*)*;* biochemistry (*"*Vincenzo Bonnici et al. : BMC bioinformatics 14.7 (2013*)"*)*;* and image processing ("F. Serratosad and J. Vergésa, Pattern Recognition, 2002*.*").

Each graph (GA, GB) has a Laplacian matrix (L). The probability of observing a specific output state, given a specific input, is proportional to the permanent (Per) of each Laplacian matrix (L). The permanents (Per) of the Laplacian matrices (L) are used for determining if the two graphs (GA, GB) are isomorphic or not.

Figure 10 shows an example of graph (G0), its adjacency matrix (A), and its Laplacian matrix (L), to complement figure 9.

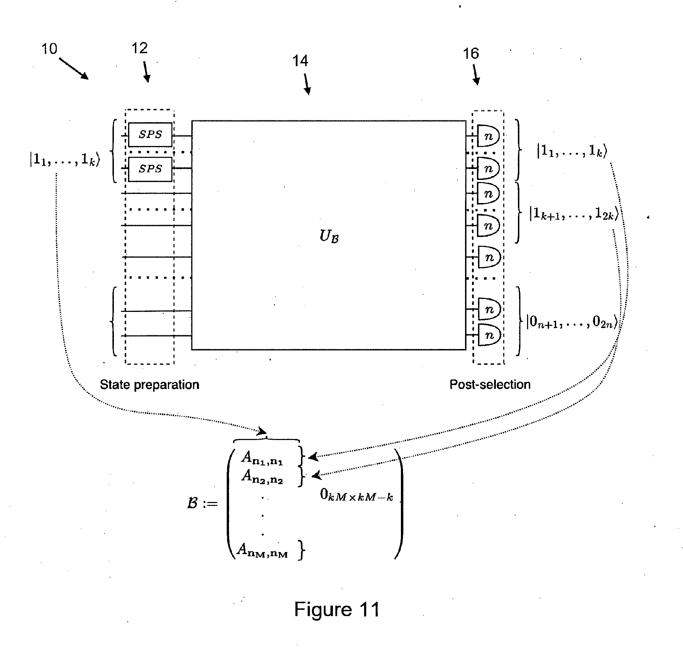

Figure 11 shows a sixth embodiment of the method according to the invention, implemented for solving problems related to densest subgraph identification.

Determining the densest subgraph of a certain size has applications in data mining *("*R. Kumar et al. Computer Networks 31, 1481 (1999*)*"), and finance (*"*S. Arora, B. Barak, Communications of the ACM 54, 101 (2011*)"*)*.*

Input is provided in the form of several candidate adjacency matrices A_{n1,n1} ; ...; A_{nM,nM}, from which a new modified adjacency matrix is constructed having the form of a block matrix (B).

In the encoding step (S1), matrix (B) is encoded into a unitary matrix (U_{B}).

In the analysis step (S3), several outputs are chosen to be used. The probability of observing each specific output state is proportional to the permanent (Per) of a specific adjacency matrix A_{ni,ni}.

The densest subgraph has the highest permanent (Per), and therefore appears most in the output statistics.

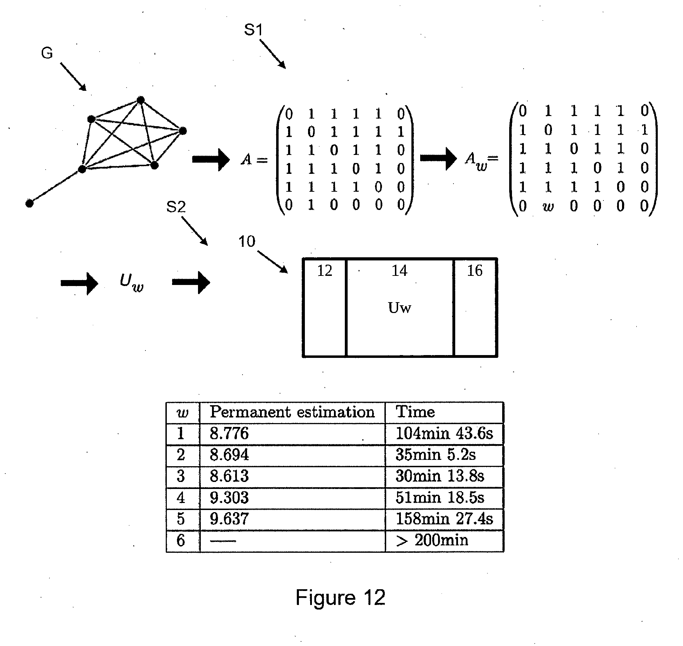

Figure 12 shows a seventh embodiment of the method according to the invention, implemented for boosting the probability of observing relevant detection events when single-photons are passed through the optical circuits (14), and thus to speed up algorithms based on devices (10).

In the encoding step (S1), the adjacency matrix (A) is modified into a modified adjacency matrix (Aw), with the aim to boost the probabilities of detection events required for solving the matrix problem in the analysis step (S3). The unitary matrix (Uw) is obtained by transforming the adjacency matrix (Aw) with the unitary dilation theorem. In the optical design step (S2), the unitary matrix (Uw) is encoded onto the linear optical circuit (14).

The encoding allows for solving the problem quicker, by increasing the probability of our desired samples to appear. Also, the original permanent, which is the actual solution of our problem, should be easily recoverable from the modified permanent.

Figure 12 shows a concrete example, with initial adjacency matrix (A). We modify the adjacency matrix (A) by multiplying the row with the least non-zero elements by a number w, so we obtain a modified adjacency matrix (Aw).

For 1<*w*<5, this modification significantly speeds up computing the permanent, that is, we can compute the permanent *Per*(*Aw*) to a given precision faster than *Per*(*A*)*.* Furthermore, we can easily compute an estimation of *Per*(*A*) given an estimate of *Per*(*Aw*) since the following relation is true : *Per*(*Aw*) / *Per*(*A*) = w.

Thanks to boosting, solving the matrix problem is faster. The boosting techniques according to the invention might give our hardware a competitive edge over some existing classical computers used in solving graph problems.

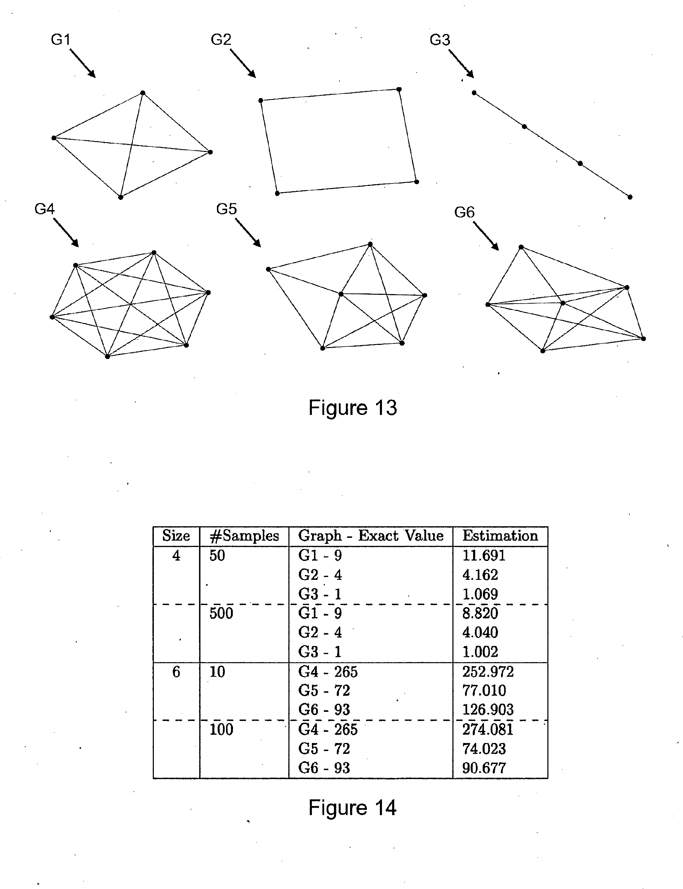

Figures 13 and 14 show an eighth embodiment of the method according to the invention.

Figure 13 shows different graphs G1, G2, G3 of size 4 (that is, composed of four nodes) and G4, G5, G6 of size 6. Figure 14 shows a table presenting the estimation of the permanent (Per) for these different graphs.

The estimate is computed by collecting samples (1 sample means 1 time we obtained an output equal to input in figure 8). We compared these estimates to the exact value of the permanent for all the graphs. We can see that the accuracy of the estimation gets better with increasing the number of collected samples, which practically corresponds to running more times the setup of figure 8, and post-selecting on cases where input is the same as output.

Other non-shown embodiments can be implemented within the scope of the invention. In addition, some technical features of the different embodiments may be, in whole or part, combined with each other. Thus, the method and the system can be adapted to the specific requirements of the application.

## Claims

1. Method for solving matrix problems, comprising:
- an encoding step (S1), wherein a matrix (M) is transformed into a unitary matrix (U), by encoding the matrix (M) with a unitary dilation theorem used as an encoding function; then
- an optical design step (S2), wherein the unitary matrix (U) is transformed into a linear optical circuit (14), then an optical device (10) is formed by the linear optical circuit (14), single-photon sources (12) at input and single-photon detectors (16) at output; then
- an analysis step (S3), wherein the optical device (10) is used for solving a problem related to the matrix (M), by analysing the output state of the single-photon detectors (16).

2. Method according to claim 1, wherein in linear optical quantum computing, the probability of observing a specific output state, given a specific input, is proportional to the permanent (Per) of the matrix (M), and wherein in the analysis step (S3), the permanent (Per) corresponding to observing the same output state as the input is used for solving a problem related to the matrix (M).

3. Method according to any one of claims 1 or 2, wherein the method is implemented for solving a problem related to at least one graph (G), which is associated with a matrix (M).

4. Method according to claim 3, wherein the graph (G) has an adjacency matrix (A), which is transformed into a unitary matrix (U) in the encoding step (S1).

5. Method according to any one of claims 1 to 4, wherein in the encoding step (S1), the matrix (M) of dimension n X n is scaled down by a factor S into a scaled matrix (Ms), which is embedded onto a larger unitary matrix (U_{M}) of dimension 2n X 2n, and wherein in the optical design step (S2), the unitary matrix (U_{M}) is transformed into a linear optical circuit (14) of 2n modes.

6. Method according to any one of claims 3 to 5, wherein the method is implemented for solving problems related to two graphs (G1, G2), wherein each graph has a Laplacian matrix (L), wherein the probability of observing a specific output state, given a specific input, is proportional to the permanent (Per) of each Laplacian matrix (L), and wherein the permanents (Per) of the Laplacian matrices (L) are used for determining if two graphs (G1, G2) are isomorphic or not.

7. Method according to any one of claims 3 to 5, wherein the method is implemented for solving problems related to densest subgraph identification, wherein in the encoding step (S1), a block matrix (B) is constructed with the adjacency matrices (A_{ni,ni}) of all subgraphs to be tested, wherein in the optical design step (S2), the block matrix (B) is embedded into a linear optical circuit (14), wherein in the analysis step (S3), the probability of observing a specific output state, given a specific input, is proportional to the permanent (Per) of each adjacency matrix (A_{ni,ni}), and wherein the densest subgraph has the highest permanent (Per), and therefore appears most in the output statistics.

8. Method according to any one of the previous claims, wherein in the encoding step (S1), the unitary matrix (U) is modified to boost the probabilities of detection events required for solving the matrix problem in the analysis step (S3).

9. Method according to claim 8, wherein the method is implemented for solving a problem related to a graph (G), which is associated with an adjacency matrix (A), and wherein in the encoding step (S1), the adjacency matrix (A) is modified by multiplying the row with the least non-zero elements by a number w, preferably comprised between 1 and 5.

10. System for implementing a method according to any one of the previous claims 1 to 9, comprising:
- an encoding device for implementing the encoding step (S1) ;
- an optical device (10) constructed in the optical design step (S2) ; and
- an analysis device for implementing the analysis step (S3).
